# EUROPEAN PATENT APPLICATION

(11) **EP 4 160 360 A1**
(43) Date of publication of application: **05.04.2023**
(21) Application number: 21199873.7
(22) Date of filing: 29.09.2021
(51) Int. Cl.: G06F 3/01, G06F 3/0354, G06F 3/02

(54) **SYSTEM FOR DECOUPLING HAPTIC FEEDBACK ON VEHICLE INTERNAL COMPONENT**

(71) Applicant: Motherson Innovations Company Limited, London EC2N 2AX (GB)
(72) Inventor: Buchet, Yann, 67000 Strasbourg (FR); Dreyer, Xavier, 67000 Strasbourg (FR)
(74) Representative: Westphal, Mussgnug & Partner Patentanwälte mbB

(57) **Abstract**

The present disclosure relates to a system 200 for decoupling haptic feedback on an internal vehicle component 100. The system 200 comprising a carrier plate (204) having at least two PCB (206), wherein each PCB (206) has at least one sensor (208); the surface (202) configured to receive input from a user, wherein the surface (202) comprises an overlay layer (210) having at least one marking (212) for allowing a user to press the surface (202) at the at least one marking (212), and wherein the at least one marking (212) is positioned vertically above the at least one sensor (208); and a compressible layer (214) disposed between the at least two PCB (206) and the overlay layer (210), wherein the compressible layer (214) is configured to compress and transmit the user input to the at least one sensor (208). Each PCB (206) is connected to an actuator (216) for providing haptic feedback on receipt of the user input by the at least one sensor (208), wherein each actuator (216) is configured to provide independent feedback to the user, wherein the compressible layer (214) is configured to transmit the haptic feedback to the surface (202) via compressed region (402) of the compressible layer (214) and absorb the haptic feedback in a non-compressed region (404) of the compressible layer (214) such that the haptic feedback is received by the user in a locally limited portion of the surface (202).

## Description

### FIELD

The present disclosure relates to vehicle internal component and in particular to a sensor integrated vehicle internal component.

### BACKGROUND

The statements in this section merely provide background information related to the present disclosure and may not constitute prior art.

Generally, user interactive systems include sensors for receiving input from the user. The sensors are integrated inside the system and are covered by an outer surface. The user provides inputs through the outer surface having multiple input locations or buttons. Such systems also include a feedback module which provides a haptic feedback in response to the user's input such as a feeling that a mechanical button gives back when pressed. For this purpose, an actuator is used to give an impulse to the surface touched by the user. Conventionally, such systems include rigid or stiff surfaces, and when the actuator provides feedback in response to user's input, it is felt over the entire outer surface having multiple input locations or buttons. Receipt of the feedback over the entire surface brings confusion to the user as to which input location or button has been pressed.

WO 2019/173781 A1 discloses a system for human-computer interfacing. The system disclosed therein includes a touch sensor defining a touch sensor surface and extending over an array of sense electrode and drive electrode pairs; a vibrator coupled to the touch sensor surface; and a controller configured to: detect application of an input onto the touch sensor surface and a force magnitude of the first input at a first time; execute a down-click cycle in response to the force magnitude exceeding a threshold magnitude by driving the vibrator to oscillate the touch sensor surface; map a location of the input on the touch sensor surface to a key of a keyboard represented by the touch sensor surface; and output a touch image representing the key and the force magnitude of the input on the touch sensor surface at approximately the first time.

WO 2019/173781 A1 further discloses feedback system by using the vibrator, which is controlled by the controller. The vibrator is actuated by the controller after mapping the location of depressed area of the touch sensor surface. However, if two or more locations are pressed simultaneously on the touch sensor surface, then the feedback may not be received accurately at each depressed area independently. Further, it may not be possible to receive independent feedback for each input from the user.

It is the object of this invention to provide decoupling system that overcomes at least some of the disadvantages stated above.

Another object of this invention is to provide decoupling system that provides locally limited feedback over the touch surface.

Another object of this invention is to provide decoupling system that provides accurate feedback to multiple input locations over the touch surface independently.

### SUMMARY

According to an embodiment a system for decoupling haptic feedback on an internal vehicle component surface comprises:
a carrier plate having at least two PCB, wherein each PCB has at least one sensor;
the surface configured to receive input from a user, wherein the surface comprises an overlay layer having at least one marking for allowing a user to press the surface at the at least one marking, and wherein the at least one marking is positioned vertically above the at least one sensor; and
a compressible layer disposed between the at least two PCB and the overlay layer, wherein the compressible layer is configured to be compressed and transmit the user input to the at least one sensor; wherein
each of the at least two PCB is connected to an actuator for providing haptic feedback on receipt of the user input by the at least one sensor, wherein each actuator is configured to provide independent feedback to the user,
wherein the compressible layer is configured to transmit the haptic feedback to the surface via compressed region of the compressible layer and absorb the haptic feedback in a non-compressed region of the compressible layer such that the haptic feedback is received by the user in a locally limited portion of the surface.

The configuration of compressible layer between the at least two PCB and the overlay layer provides advantage of absorbing the feedback in non-compressed region of the compressible layer and transmitting the feedback over the compressed region of the compressible layer. In other words, the compressed region may have a higher density than the non-compressed region such that the transmission of the feedback differs. Thus, the feedback is received on a locally limited portion or locally restricted portion and not the entire the surface. Further, due to the configuration of actuators and PCBs, the system is capable of receiving two or more inputs from a user, and in response to each input from the user, independent feedbacks may be provided to the surface, wherein two or more feedbacks do not interfere with each other. Thus, accurate feedbacks are received by the system for multiple user inputs without any confusion to the user.

In accordance with a further embodiment the system comprises at least one illuminating component positioned vertically below the at least one marking. The illuminating component enables the marking to glow, which is useful in finding the location of marking even in dark environment.

In accordance with a further embodiment the at least one marking includes a non-masked translucent layer to light up the input location, or can be a perforated non translucent material. The at least one marking may be made of material having different stiffness from the stiffness of the material of the surface such that a local change in the stiffness may be observed by the user to identify the input location. The configuration of the at least one marking allows the user to identify the input location easily. The at least one marking may be made of conductive material. The advantage of having the at least one marking made of conductive material is that the conductive material helps capacitive detection of the sensor underneath.

In accordance with a further embodiment the system comprises a decoupling material disposed between the at least two PCB and the carrier plate. The decoupling material absorbs vibration caused by the actuator and prevents the vibration to be transmitted to the carrier plate.

In accordance with a further embodiment the at least one sensor is one of a switch/button, a touch sensor, pressure sensor and a capacitive sensor. The at least one sensor is adapted to detect the user's input and transmit it to the at least two PCB.

In accordance with a further embodiment the compressible layer has density ranging from 20 kg/m³ to 90 kg/m³. The density of the compressible layer allows the compressible layer to be compressed when the user presses the surface and absorb the feedback in the non-compressed region of the compressible layer.

In accordance with a further embodiment the compressible layer comprises one of polyvinyl chloride (PVC), polyurethane (PU) thermoplastic polyurethane (TPU), thermoplastic olefin (TPO).

In accordance with a further embodiment the compressible layer is a 3D-mesh structure.

In accordance with an embodiment the internal vehicle component comprises at least one of a door trim, a center console or an instrument panel of the vehicle. The system may be incorporated in the door trim, the center console and the instrument panel of the vehicle. These vehicle components may be used to provide inputs from the user as well as receive feedback from the system to the user. Thus, these vehicle components are more advanced in terms of user interaction with respect to the existing vehicle components.

In accordance with an embodiment the locally limited portion of the surface is the portion of the surface on and around the at least one marking at which the user presses the surface. The system provides feedback on the locally limited portion of the surface and not the entire surface of the vehicle component.

In accordance with a further embodiment the carrier plate is a rigid plate made of Propylene Carbonate (PC), Acrylonitrile Butadiene Styrene (ABS), Polypropylene (PP) or a blend of these materials optionally with or without filler and/or reinforcement such as talc, glass fibre. The carrier plate is made of rigid material such as to provide rigidity to the system and make the system robust.

In accordance with a further embodiment the haptic feedback is transmitted from the actuator to the surface via at least one of the at least two PCB and the compressed region of the compressible layer. When the actuator is actuated to provide feedback, the at least one of the at least two PCB receives the feedback directly from the actuator. The at least one of the at least two PCB then transmits the feedback to the surface via the compressed region of the compressible layer. This enable easy transmission of feedback to the surface.

In accordance with a further embodiment the overlay layer is made of genuine or artificial leather, Polyvinyl chloride (PVC), Thermoplastic polyurethane (TPU) or Thermoplastic olefin (TPO) foil or textile. The material of the overlay layer enables easy transmission of user's input to the at least one of the at least two PCB.

In accordance with a further embodiment the system is configured to receive two inputs from user, wherein the user presses the surface at two markings simultaneously and receive two different localized feedback on the surface independently without interference. The system enables a user to provide two or more inputs and receive feedback for each input. Each feedback is independent from one another and hence the feedbacks do not interfere with one another.

It should be noted that the features set out individually in the following description can be combined with each other in any technically advantageous manner and set out other forms of the present disclosure. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present disclosure in particular in connection with the figures.

### DRAWINGS

In order that the disclosure may be well understood, there will now be described various forms thereof, given by way of example, reference being made to the accompanying drawings, in which:
Fig. 1a illustrates an internal vehicle component according to the present disclosure;
Fig. 1b illustrates an enlarged view of portion "A" of the vehicle internal component of Fig. 1a;
Figs. 2a to 2g illustrates various embodiments of at least one marking;
Fig. 3 illustrates a cross sectional view of a system for decoupling haptic feedback on the internal vehicle component surface according to the present disclosure;
Fig. 4 illustrates a cross sectional view of the system for decoupling haptic feedback on the internal vehicle component surface of Fig. 3 showing user's input according to the present disclosure;
Fig. 5 illustrates a perspective view of arrangement of PCBs into three zones according to the present disclosure;
Fig. 6a illustrates a cross sectional view of one zone showing the compressible layer in non-compressed state; and
Fig. 6b illustrates a cross sectional view of one zone showing the compressible layer in compressed state.

### DETAILED DESCRIPTION

The following description is merely exemplary in nature and is not intended to limit the present disclosure, application, or uses. It should be understood that throughout the drawings, corresponding reference numerals indicate like or corresponding parts and features.

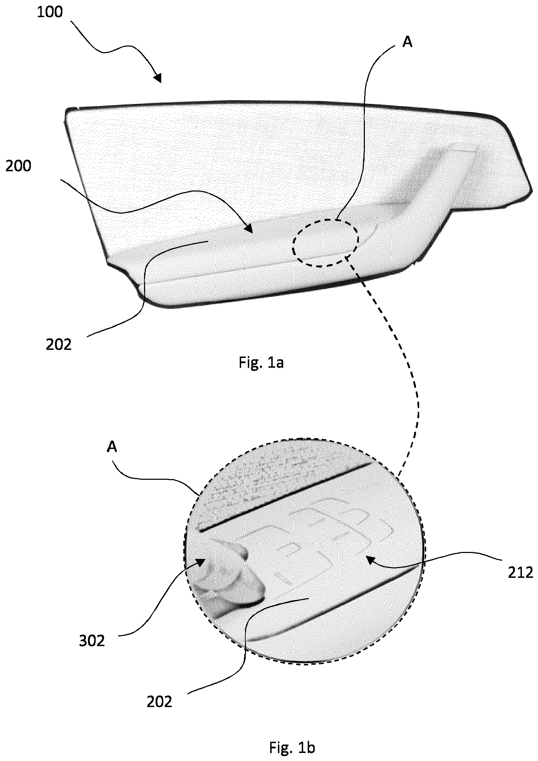

Fig. 1a illustrates an embodiment of an internal vehicle component 100. The internal vehicle component 100 may include, but not limited to, one of a door trim, a centre console, an instrument panel or a combination of these components thereof. In the illustrated embodiment, the internal vehicle component 100 is a door trim, however the internal vehicle component 100 may be any component having a touch sensitive surface 202. The internal vehicle component 100 may be incorporated with a system 200 for decoupling haptic feedback on the touch sensitive surface 202. The term "touch sensitive surface" may be interchangeably used with the term "surface" throughout the description. The term "haptic feedback" refers to a mechanical vibration or a feeling of touch received by a user in response to an input provided by the user. For example, when a user presses a button or marking on a touch surface of a system, the user receives a mechanical vibration produced by the system which can be felt through their sense of touch. This mechanical vibration received in response to the user's input is what is referred to as haptic feedback.

The internal vehicle component 100 as shown in Fig. 1a, includes the system 200 having the surface 202. The surface 202 may have at least one marking 212. The at least one marking 212 refers to input location where a user provides input to the system 200. In the embodiment of Fig. 1a, the at least one marking 212 may be used for controlling window glass of the door or adjusting rear view mirror of the vehicle.

Fig. 1b illustrates an enlarged view of a portion "A" of Fig. 1a. The surface 202 includes at least one marking 212. The at least one marking 212 is used to provide input from the user's finger 302. The user provides input to the system 200 by pressing or tapping at the at least one marking 212. On receipt of the input from the user, the system 200 provides one or more haptic feedback in the form of vibration to the surface 202 at the at least one marking 212 where the user presses or taps the surface 202. The at least one marking 212 may include a translucent portion to light up the input location, or can be a perforated non translucent material. The at least one marking 212 may be made of material having different stiffness from the stiffness of the material of the surface 202 such that a local change in the stiffness may be observed by the user to identify the input location.

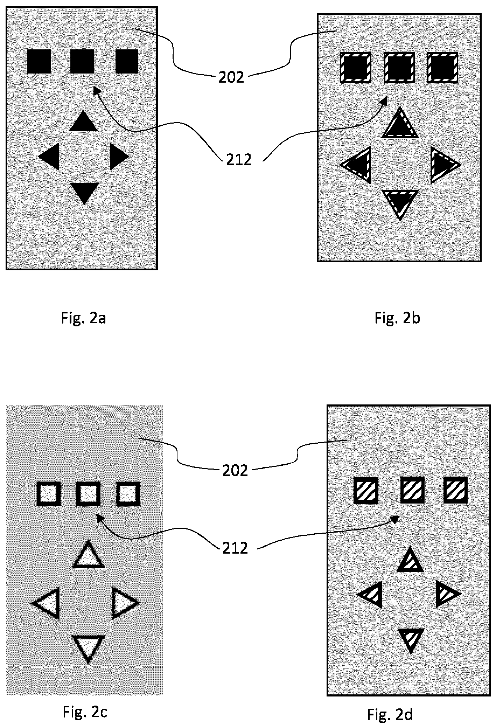

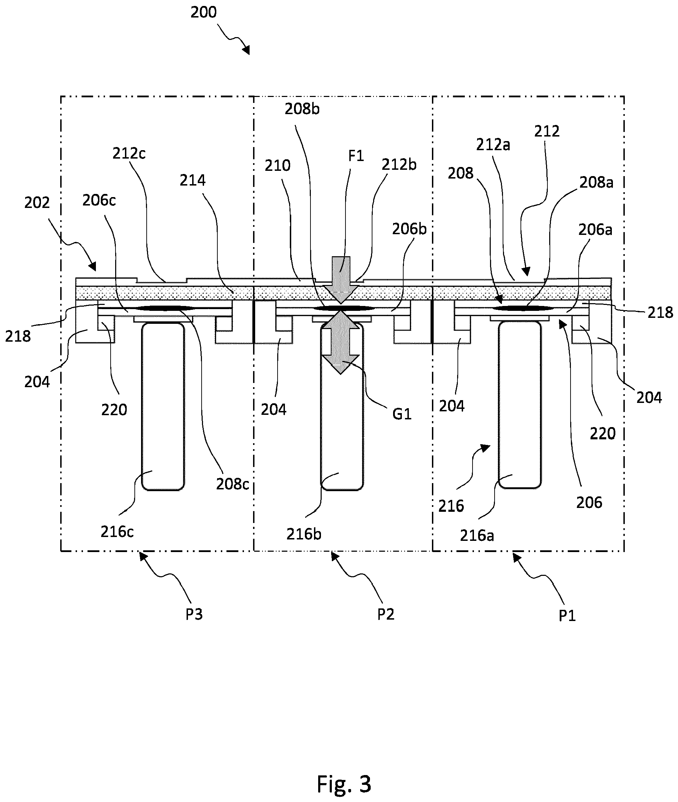

Figs. 2a to 2g illustrates various embodiments of the at least marking 212. Fig. 2a and 2b illustrate the surface 202 with at least one marking 212. The surface 202 is laminated with a translucent soft material. The translucent soft material is masked with a non-translucent layer. Outer periphery of the at least one marking 212 includes a non-masked area which may light up when required, such as in case of dark environment, when a illuminating component 218 (shown in Fig. 3) is turned on. Fig. 2a illustrates the surface 202 when the outer periphery of the at least one marking 212 are not lit up, i.e. the illuminating component 218 is turned off. Fig. 2b illustrates the surface 202 when the outer periphery of the at least one marking 212 are lit up, i.e. the illuminating component 218 is turned on. The illuminated outer periphery of the at least one marking 212 is shown by the hatching lines in Fig. 2b.

In Figs. 2c and 2d, the surface 202 is laminated with a translucent soft material. The translucent soft material is masked with a non-translucent layer. Inner portion of the at least one marking 212 includes non-masked area which may light up when required, such as in case of dark environment when an illuminating component 218 (shown in Fig. 3) is turned on. Fig. 2c illustrates the surface 202 when the inner portion of the at least one marking 212 are not lit up, i.e. the illuminating component 218 is turned off. Fig. 2d illustrates the surface 202 when the inner portion of the at least one marking 212 is lit up, i.e. the illuminating component 218 is turned on. The illuminated inner portion of the at least one marking 212 is shown by the hatching lines in Fig. 2d.

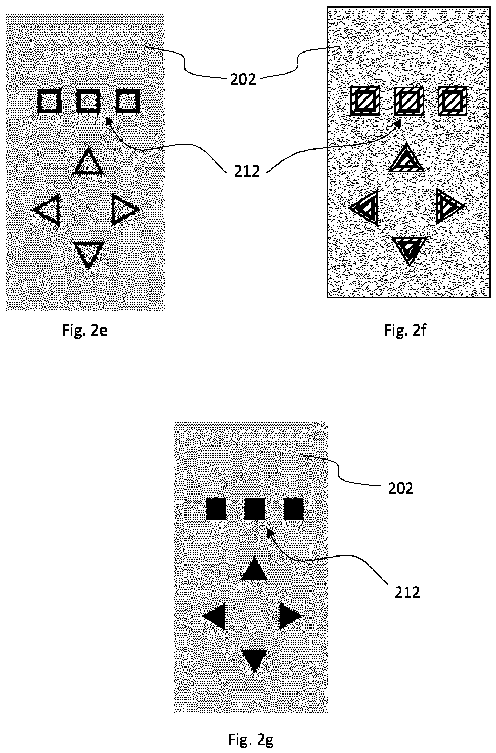

In Figs. 2e and 2f, the surface 202 is laminated with a translucent soft material. The translucent soft material is masked with a non-translucent layer. Inner and outer periphery of the at least one marking 212 includes a non-masked area which may light up when required, such as in case of dark environment, when an illuminating component 218 (shown in Fig. 3) is turned on. Fig. 2e illustrates the surface 202 when the inner and the outer periphery of the at least one marking 212 are not lit up, i.e. the illuminating component 218 is turned off. Fig. 2f illustrates the surface 202 when the inner and the outer periphery of the at least one marking 212 is lit up, i.e. the illuminating component 218 is turned on. The illuminated inner and outer periphery of the at least one marking 212 is shown by the hatching lines in Fig. 2f.

In Fig. 2g, the at least one marking 212 is be made of different material having different stiffness for identification of the at least one marking 212 on the surface 202. In an embodiment the at least one marking may be made from embossing structure, stamping icons and/or digital printing icons. The advantage of having the at least one marking 212 with different stiffness is that the at least one marking 212 can be identified by the user easily since different stiffness provides different touch feeling to the user. Another advantage of having the at least marking with different stiffness is that a better haptic feedback may be received by the user because of stiff material of the at least one marking enhances the transmission the vibration. In an embodiment, the at least one marking 212 is made of conductive material. The advantage of having the at least one marking made of conductive material is that the sensitivity of capacitive touches is enhanced.

Fig. 3 illustrates a cross sectional view of the system 200. The system 200 may be incorporated inside the internal vehicle component 100. The system 200 includes the surface 202 which may be adapted to interact with the user via the at least one marking 212.

The system 200 further comprises a carrier plate 204. The carrier plate 204 is a rigid structure which supports the system 200. The carrier plate is made of Propylene Carbonate (PC), Acrylonitrile Butadiene Styrene (ABS), Polypropylene (PP) or a blend of these materials optionally with or without filler and/or reinforcement such as talc, glass fibre. The carrier plate 204 may act as a frame to provide rigidity to the system 200. The system 200 further comprises at least two Printed Circuit Boards (PCB) 206. The at least two PCB 206 are supported on the carrier plate 204. As shown in Fig. 2, the at least two PCB 206 comprises a first PCB 206a, a second PCB 206b and a third PCB 206c. Each PCB 206a, 206b, 206c has at least one sensor 208. The at least one sensor 208 is disposed on each PCB 206a, 206b, 206c and is configured to detect the user's input. As shown in Fig. 3, the at least one sensor 208 comprises at least one first sensor 208a, at least one second sensor 208b and at least one third sensor 208c. The at least one first sensor 208a corresponds to the first PCB 206a, the at least one second sensor 208b corresponds to the second PCB 206b and the at least one third sensor 208c corresponds to the third PCB 206c. The at least one sensor 208 is also configured to transmit the detected input to the corresponding PCB 206a, 206b, 206c.

The surface 202 further comprises an overlay layer 210 having at least one marking 212. The overlay layer 210 is made of soft material such as genuine or artificial leather, Polyvinyl chloride (PVC), Thermoplastic polyurethane (TPU) or Thermoplastic olefin (TPO) foil or textile. As shown in Fig. 2, the at least one marking 212 comprises at least one first marking 212a, at least one second marking 212b and at least one third marking 212c. The at least one first marking 212a is disposed vertically above the at least one first sensor 208a. The at least one second marking 212b is disposed vertically above the at least one second sensor 208b. The at least one third marking 212c is disposed vertically above the at least one third sensor 208c. The vertical position of the at least one marking 212 and the at least one sensor 208 allows the user to find the input location more easily. The overlay layer 210 allows the user's input to be transferred to the at least one sensor 208. The user's input may be in the form of a tapping or a pressing force F1. When a user presses or taps on the surface 202 at the at least one marking 212, the overlay layer 210 allows the pressing/tapping force F1 to reach the at least one sensor 208. The at least one sensor 208 then detects the pressing or tapping force F1 and transmits the input signal to the corresponding PCB 206a, 206b, 206c. The at least one sensor 208 may include one of a switch, a button, a touch sensor, a pressure sensor or a combination thereof. In an embodiment, the at least one sensor 208 is a switch.

The system 200 further includes at least two actuators 216. Each PCB 206a, 206b, 206c is connected to an actuator 216. As shown in Fig. 3, the first PCB 206a is operably connected to a first actuator 216a, the second PCB 206b is connected to a second actuator 216b and the third PCB 206c is connected to a third actuator 216c. The at least two actuators 216 are configured to provide haptic feedback in the form of vibration to the corresponding PCB 206. The at least two actuators 216 provide the haptic feedback in the form of vibration G1 and transmit the vibration G1 to the corresponding PCB 206. The at least two PCB 206 are configured to receive the input signal detected by the at least one sensor 208 and to provide actuating signal to the corresponding actuator 216.

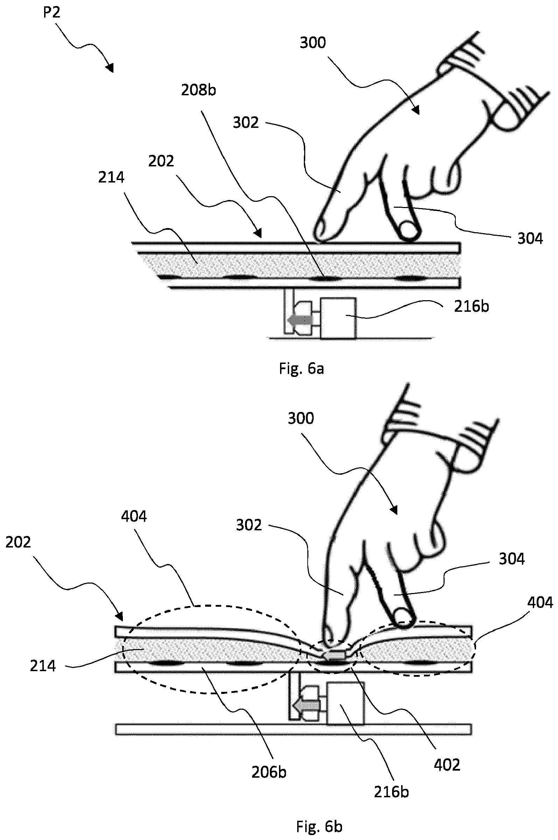

The system 200 further comprises a compressible layer 214. The compressible layer 214 is disposed between the at least two PCB 206 and the overlay layer 210. When the user presses or taps the surface 202, the compressible layer 214 is compressed and the pressing force F1 is transmitted to the at least one sensor 208 via a compressed region 402 (shown in Fig. 6a and Fig. 6b) of the compressible layer 214. The compressible layer 214 is compressed only in the compressed region 402, and rest of the compressible layer 214 is not compressed. Thus, in a compressed state, the compressible layer 214 is divided into the compressed region 402 and a non-compressed region 404 (shown in Fig. 6a and Fig. 6b). The compressible layer 214 transmits the user's input to the at least one sensor 208 via the compressed region 402. In response to the user's input, the system 200 provides haptic feedback via the actuator 216. The haptic feedback is transmitted to at least one of the at least two PCB 206 and then to the surface 202 at the least one marking 212 via the compressed region 402 of the compressible layer 214. The compressible layer 214 absorbs the haptic feedback in the non-compressed region 404 and only transmits the feedback via the compressed region 402. Thus, the feedback is received by the user in a locally limited portion of the surface 202 and not on the entire surface 202. The locally limited portion of the surface 202 is the portion of the surface 202 on and around the at least one marking 212 at which the user presses or taps the surface 202. This localized receipt of feedback is advantageous to avoid confusion to the user, and the user can accurately identify the location of the feedback.

The compressible layer 214 is made of material including, but not limited to, one of polyvinyl chloride (PVC), polyurethane (PU) thermoplastic polyurethane (TPU), thermoplastic olefin (TPO) or any other material that may be used to create internal vehicle component 100. In an embodiment, the compressible layer 214 may include 3D-mesh structure. The compressible layer 214 has a density ranging from 20 kg/m³ to 90 kg/m³. The density of the compressible layer 214 allows the compressible layer 214 to be easily compressed and decompressed.

In an embodiment, the system 200 may comprise an illuminating component 218 disposed above the at least two PCB 206. The illuminating component 218 is positioned vertically below the at least one marking 212, shown in Fig. 3. The illuminating component 218 may include a light emitting diode (LED) or a lightguide. The illuminating component 218 enables the at least one marking 212 to be illuminated, which is useful in finding the location of the at least one marking 212 even in dark environment.

The system 200 further comprises a decoupling material 220 for supporting the at least two PCB 206 vertically above the carrier plate 204. The decoupling material 220 absorbs the vibration provided by the actuator 216 and prevents the vibration to reach the carrier plate 204. Thus, the decoupling material 220 helps in making the system 200 stable by preventing the vibration to be transmitted to the carrier plate 204.

The system 200 may be divided into a first zone PI, a second zone P2 and a third zone P3. The first zone P1 includes the first PCB 206a, the at least one first sensor 208a, the at least one first marking 212a and the first actuator 216a. The second zone P2 includes the second PCB 206b, the at least one second sensor 208b, the at least one second marking 212b and the second actuator 216b. The third zone P3 includes the third PCB 206c, the at least one third sensor 208c, the at least one third marking 212c and the third actuator 216c. The carrier plate 204, the compressible layer 214 and the overlay layer 210 is common for all the zones PI, P2 and P3.

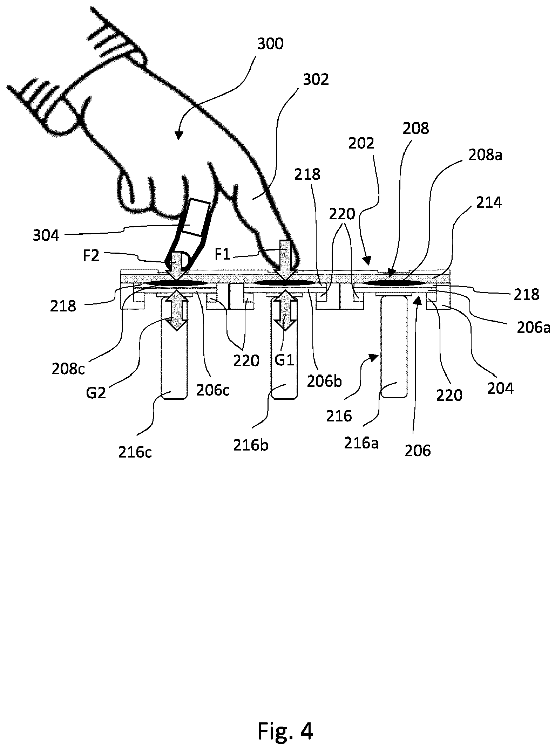

Fig. 4 illustrates a cross sectional view of the system 200 showing the manner in which the user may provide input to the system 200. A user's hand 300 is shown in Fig. 4 in which the user's first finger 302 and second finger 304 are placed on the surface 202. The first finger 302 is placed at the at least one second marking 212b and the second finger 304 is placed at the at least one third marking 212c. The user presses or taps the surface 202 using the first finger 302 and the second finger 304. The user may provide different inputs using different fingers independently and/or simultaneously. As shown in Fig. 4, the user presses the surface 202 at the at least one second marking 212b (shown in Fig. 3) by a pressing force F1 and at the at least one third marking 212c by a pressing force F2. The at least one second sensor 208b (shown in Fig. 3) detects the force F1 and transmits the input signal to the second PCB 206b. The at least one third sensor 208c detects the force F2 and transmits the input signal to the third PCB 206c. In response to the user's input force F1, the system 200 actuates the second actuator 216b and the second actuator 216b transmits the haptic feedback in the form of vibration G1 to the second PCB 206b. The haptic feedback in the form of vibration G1 is then transmitted to the surface 202 at the at least one second marking 212b (shown in Fig. 3). In response to the user's input force F2, the system 200 actuates the third actuator 216c and the third actuator 216c transmits the haptic feedback in the form of vibration G2 to the third PCB 206c. The haptic feedback in the form of vibration G2 is then transmitted to the surface 202 at the at least one third marking 212c (shown in Fig. 3). In an embodiment, two input forces F1 and F2 may have different magnitudes and the two haptic feedbacks in the form of vibration G1 and G2 may also have different magnitudes and/or frequencies. In another embodiment, two forces F1 and F2 may have same magnitudes and the two haptic feedbacks in the form of vibrations G1 and G2 may also have same magnitudes and/or frequencies. Alternatively, the user may provide one input by pressing the surface 202 and other input by tapping the surface 202, and the system 200 may provide same or different haptic feedbacks for these inputs. Thus, two or more same or different inputs may be provided by the user and for each input independent feedback may be provided by the system 200. The two feedbacks are independent of each other and hence do not interfere with each other. In other embodiment, three or more inputs may be provided to the system 200 and independent feedbacks for each input may be provided by the system 200 in which the feedbacks do not interfere with one another.

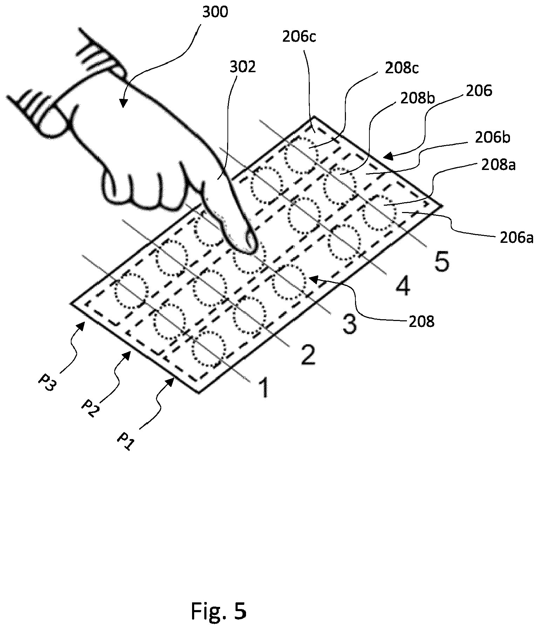

Fig. 5 illustrate a perspective view of the arrangement of the at least two PCB 206 in three zones PI, P2 and P3. The first PCB 206a, the second PCB 206b and the third PCB 206c are arranged linearly. Each PCB 206a, 206b, 206c has at least one sensor 208. The first PCB 206a has the at least one first sensor 208a, where in the illustrated embodiment the at least one first sensor 208a includes five sensors 1,2,3,4,5 arranged linearly along the length of the first PCB 206a. The second PCB 206b has the at least one second sensor 208b, where in the illustrated embodiment the at least one second sensor 208b includes five sensors 1,2,3,4,5 arranged linearly along the length of the second PCB 206b. The third PCB 206c has the at least one third sensor 208c, where in the illustrated embodiment, the at least one third sensor 208c includes five sensors 1,2,3,4,5 arranged linearly along the length of the third PCB 206c. The first PCB 206a is connected to the first actuator 216a, the second PCB 206b is connected to the second actuator 216b and the third PCB 206c is connected to the third actuator 216c (shown in Fig. 3 and 4). The first PCB 206a, the first actuator 216a and the at least one first sensors 208a (1,2,3,4,5) belong to the first zone P1. The second PCB 206b, the second actuator 216b and the at least one second sensors 208b (1,2,3,4,5) belong to the second zone P2. The third PCB 206c, the third actuator 216c and the at least one third sensors 208c (1,2,3,4,5) belong to the third zone P3. Thus, each zone PI, P2 and P3 has one actuator 216 for transmitting haptic feedback to the corresponding PCB 206a, 206b, 206c. The first PCB 206a receives the haptic feedback in the form of vibration from the first actuator 216a and transmit the haptic feedback to the at least one first marking 212a via the compressed region 402 (shown in Figs. 6a and 6b) of the compressible layer 214 when the at least one first sensor 208a (1,2,3,4,5) detects input by the user. The second PCB 206b receives haptic feedback in the form of vibration from the second actuator 216b and transmit the haptic feedback to the at least one second marking 212b via the compressed region 402 (shown in Figs. 6a and 6b) of the compressible layer 214 when the at least one second sensor 208b (1,2,3,4,5) detects input by the user. Similarly, the third PCB 206c receives haptic feedback in the form of vibration from the third actuator 216c and transmit the haptic feedback to the at least one third marking 212c via the compressed region 402 (shown in Figs. 6a and 6b) of the compressible layer 214 when the at least one third sensor 208c (1,2,3,4,5) detects input by the user. The compressible layer 214 dampens the haptic feedback except at the compressed region (402) and only transmit the haptic feedback at the markings 212a, 212b, 212c where user presses or taps the surface 202. As shown in Fig. 5, the user is shown placing his finger 302 on the second zone P2.

Fig. 6a illustrates the arrangement of the system 200 in the second zone P2 shown in Fig. 5 when the user has not provided the input, and Fig. 6b illustrates the arrangement of the system 200 in the second zone P2 when the user has provided the input. As shown in Fig. 6a, the user's first finger 302 and the second finger 304 are placed on the surface 202. In Fig. 6b illustrate a state in which the user has provided the input by pressing the surface 202 by the first finger 302, and the second finger 304 is laying on the surface 202. As shown in Fig. 6b, the user presses the surface 202 in zone P2 using the first finger 302. The compressible layer 214 is compressed when the input is received by the at least one second sensor 208b. The compressible layer 214 has a compressed region 402 and a non-compressed region 404. Once the input is received by the at least one second sensor 208b, the second actuator 216b is actuated and the feedback in the form of vibration is transmitted to the second PCB 206b. The feedback is transmitted from the second PCB 206b to the surface 202 via the compressed region 402 of the compressible layer 214. The non-compressed region 404 of the compressible layer 214 absorbs the feedback and does not transmit the same to the surface 202 above the non-compressed region 404 of the compressible layer 214. Thus, the feedback is received at a locally limited portion of the surface 202 only, where the user provides input and not on the entire surface 202. That is to say, the feedback is received by the user by the first finger 302, and no or minimum feedback is received by the second finger 304.

In an alternate embodiment, the at least two PCB 206 may be replaced by a rigid plate and the system 200 may comprise a controller (not shown) to perform the function of the at least two PCB. The controller may be connected to the rigid plate and the at least one sensor 208. The controller may be configured to receive input from the at least one sensor 208 and to actuate the actuator for providing haptic feedback.

The foregoing description of various preferred embodiments have been presented for purposes of illustration and description. It is not intended to be exhaustive or to limit the disclosure to the precise forms disclosed, and obviously many modifications and variations are possible in light of the above teaching. The example embodiments, as described above, were chosen and described in order to best explain the principles of the disclosure and its practical application to thereby enable others skilled in the art to best utilize the disclosure in various embodiments and with various modifications as are suited to the particular use contemplated. The features of the invention disclosed in the foregoing description, in the drawings and in the claims can be essential both individually and in any combination for the implementation of the invention in its various embodiments.

### PARTS LIST

- 100 -: Internal vehicle component
- 200-: System for decoupling haptic feedback
- 202-: Surface
- 204-: Carrier plate
- 206-: At least two PCB
- 206a-: First PCB
- 206b-: Second PCB
- 206c-: Third PCB
- 208-: At least one sensor
- 208a-: At least one first sensor
- 208b-: At least one second sensor
- 208c-: At least one third sensor
- 210-: Overlay layer
- 212-: At least one marking
- 212a-: At least one first marking
- 212b-: At least one second marking
- 212c-: At least one first marking
- 214-: Compressible layer
- 216-: At least two actuator
- 216a-: First actuator
- 216b-: Second actuator
- 216c-: Third actuator
- 218-: illuminating component
- 220-: Decoupling material
- 300-: User's hand
- 302-: User's first finger
- 304-: User's second finger
- 402-: Compressed region of compressible layer
- 404-: Non-compressed region of compressible layer
- A-: Portion of internal vehicle component
- F1 -: First pressing force
- F2-: Second pressing force
- G1 -: First mechanical vibration of haptic feedback
- G2-: Second mechanical vibration of haptic feedback
- P1 -: First zone
- P2-: Second zone
- P3 -: Third zone

## Claims

1. A system (200) for decoupling haptic feedback on an internal vehicle component surface (202), the system (200) comprising:
- a carrier plate (204) having at least two PCB (206a, 206b, 206c), wherein each PCB (206a, 206b, 206c) has at least one sensor (208a, 208b, 208c);
- the surface (202) configured to receive input from a user, wherein the surface (202) comprises an overlay layer (210) having at least one marking (212a, 212b, 212c) for allowing a user to press the surface (202) at the at least one marking (212a, 212b, 212c), and wherein the at least one marking (212a, 212b, 212c) is positioned vertically above the at least one sensor (208a, 208b, 208c); and
- a compressible layer (214) disposed between the at least two PCB (206a, 206b, 206c) and the overlay layer (210), wherein the compressible layer (214) is configured to compress and transmit the user input to the at least one sensor (208a, 208b, 208c), wherein the compressible layer (214) is divided into a compressed region (402) and a non-compressed region (404) upon receipt of an input from a user;
**characterized in that**
each of the at least two PCB (206a, 206b, 206c) is connected to an actuator (216a, 216b, 216c) for providing haptic feedback on receipt of the user input by the at least one sensor (208a, 208b, 208c), wherein each actuator (216a, 216b, 216c) is configured to provide independent feedback to the user,
wherein the compressible layer (214) is configured to transmit the haptic feedback to the surface (202) via the compressed region (402) of the compressible layer (214) and absorb the haptic feedback in the non-compressed region (404) of the compressible layer (214).

2. The system as claimed in claim 1, further comprises at least one illuminating component (218) positioned vertically below the at least one marking (212a, 212b, 212c).

3. The system as claimed in claim 1 or 2, wherein the at least one marking (212a, 212b, 212c) includes a non-masked translucent layer.

4. The system as claimed in claim 1 or 2, wherein the at least one marking (212a, 212b, 212c) being a perforated non translucent material.

5. The system as claimed in claim 1 or 2, wherein the at least one marking (212a, 212b, 212c) is made of material having stiffness different from stiffness of the material of the surface 202.

6. The system as claim in claim 1 or 2, wherein the at least one marking (212a, 212b, 212c) is made of conductive material.

7. The system as claimed in claim 1, further comprises a decoupling material (220) disposed between the at least two PCB (206a, 206b, 206c) and the carrier plate (204).

8. The system as claimed in claim 1, wherein the at least one sensor (208a, 208b, 208c) is one of a switch/button, a touch sensor, a pressure sensor and a capacitive sensor.

9. The system as claimed in claim 1, wherein the compressible layer (214) has density ranging from 20 kg/m³ to 90 kg/m³.

10. The system as claimed in claim 1, wherein the compressible layer (214) comprises one of polyvinyl chloride (PVC), polyurethane (PU) thermoplastic polyurethane (TPU), thermoplastic olefin (TPO).

11. The system as claimed in claim 1, wherein the compressible layer (214) comprises 3D-mesh structure.

12. The system as claimed in claim 1, wherein the internal vehicle component (100) comprises at least one of a door trim, a center console or an instrument panel of the vehicle.

13. The system as claimed in claim 1, wherein the locally limited portion of the surface (202) is the portion of the surface on and around the at least one marking (212a, 212b, 212c) at which the user presses the surface (202).

14. The system as claimed in claim 1, wherein the carrier plate (204) is a rigid plate made of Propylene Carbonate (PC), Acrylonitrile Butadiene Styrene (ABS), Polypropylene (PP) or a combination thereof.

15. The system as claimed in claim 1, wherein the haptic feedback is transmitted from the actuator (216a, 216b, 216c) to the surface (202) via at least one of the at least two PCB (206a, 206b, 206c) and the compressed region (402) of the compressible layer (214).

16. The system as claimed in claim 1, wherein the overlay layer (210) is made of genuine or artificial leather, Polyvinyl chloride (PVC), Thermoplastic polyurethane (TPU) or Thermoplastic olefin (TPO) foil or textile.

17. The system as claimed in claim 1, wherein the system (200) is configured to receive two inputs from the user, wherein the user presses the surface (202) at two markings (212b, 212c) simultaneously and receives two different localized feedback on the surface (202) independently without interference.
